Europäisches Patentamt

European Patent Office

Office européen des brevets

(11) Veröffentlichungsnummer: **0 468 150 A1**

# EUROPÄISCHE PATENTANMELDUNG

(21) Anmeldenummer: **91107296.5**

(51) Int. Cl.5: **B27K 3/32**, B27K 3/20

(22) Anmeldetag: **06.05.91**

(30) Priorität: **25.07.90 DE 4023572**

(43) Veröffentlichungstag der Anmeldung:
**29.01.92 Patentblatt 92/05**

(84) Benannte Vertragsstaaten:
**AT BE CH DE DK ES FR GB GR IT LI LU NL SE**

(71) Anmelder: **RÜTGERSWERKE
AKTIENGESELLSCHAFT
Mainzer Landstrasse 217
W-6000 Frankfurt am Main 1(DE)**

(72) Erfinder: **Härtner, Helmut, Dr.
Weberstrasse 3
W-6940 Weinheim(DE)**
Erfinder: **Barth, Volker, Dr.
An der Bleiche 1
W-6700 Ludwigshafen 29(DE)**
Erfinder: **Beez, Volker
Sandhoferstrasse 104
W-6800 Mannheim 31(DE)**
Erfinder: **Zander, Marina
Schremserstrasse 90
W-6842 Bürstadt(DE)**

(54) **Wässrige Lösungen mit hohem Borgehalt.**

(57) Neutrale wäßrige Lösungen mit hohem Borgehalt enthalten Borsäure, Ammonium- oder Alkaliborate und Ammonium- oder Alkalipolyborate.

EP 0 468 150 A1

Die Erfindung betrifft wäßrige Lösungen mit hohem Borgehalt, die aber trotzdem nicht alkalisch sind.

Derartige Lösungen finden Verwendung bei der Herstellung von Holz- und Flammschutzmitteln. Dabei ist bei 20 °C eine Konzentration erwünscht, die einem Gehalt von etwa 3,0 % Bor entspricht.

Die entsprechenden Löslichkeiten werden von den Alkalimetaboraten bzw. Kaliumborat erreicht. Diese Verbindungen enthalten jedoch zuviel Alkali. Die hohen pH-Werte über 10 führen zu einer Versprödung des Holzes und damit zu einer Beeinträchtigung.

Gemäß DE-PS 21 40 051 werden Borsäure-Konzentrate hergestellt, wobei die Konzentrate Borsäure, gelöst in einem wasserlöslichen Amin oder Polyamin oder in Mischungen von wasserlöslichen Aminen und/oder Polyaminen, enthalten.

Auch dabei wird durch die Amine ein deutlich alkalischer pH-Bereich erzielt. Darüberhinaus können die toxikologisch nicht unbedenklichen Amine aus entsprechend behandeltem Holz leicht abdunsten bzw. ausgewaschen werden und stellen dann eine erhebliche Umweltbelastung dar. Ferner verfärben diese Lösungen das behandelte Holz tief gelb.

Ähnliche Umweltprobleme ergeben sich bei der Verwendung von Borsäure-Lösungen gemäß EP-B 0 046 380, bei denen Borsäure in Glykol oder Glykol-Wasser-Gemischen gelöst ist.

Es ist daher Aufgabe der Erfindung, Borverbindungen enthaltende, wäßrige Lösungen bereitzustellen, die einen hohen Borgehalt haben, die aber nahezu neutral sind und die frei sind von abdunstenden oder auswaschbaren organischen Lösemitteln oder -vermittlern, ein hohes Eindringvermögen in das Holz besitzen und beim Imprägnieren keine störenden Holzverfärbungen verursachen.

Die Lösung der Aufgabe erfolgt durch wäßrige Lösungen gemäß der Ansprüche 1 bis 5.

Es wurde gefunden, daß die Löslichkeit von Borsäure in Wasser steigt, wenn die Lösung gleichzeitig zusätzlich Ammonium- oder Alkaliborate und Ammonium- oder Alkalipolyborate enthält.

So lösen sich gemäß Literaturangaben bei 20 °C 4,9g Borsäure in 100 g Wasser. Wie das Beispiel zeigt, lösen sich im erfindungsgemäßen Lösungsgemisch bei 20 °C 6,1 g Borsäure in einer Lösung, die nur 82,84 g Wasser enthält.

Darüberhinaus ist diese erfindungsgemäße Lösung auch bei niedrigeren Temperaturen stabil. Während in reinem Wasser die Löslichkeit von Borsäure und von Boraten mit fallender Temperatur stark abnimmt (Löslichkeit von Borsäure bei 0 °C : 2,78 g/100g Wasser), ist die erfindungsgemäße Lösung auch bei niedrigen Temperaturen stabil. Sie läßt sich z. B. auf 0 °C abkühlen, ohne daß Bestandteile auskristallieren.

Durch diese verbesserte Löslichkeit der Borsäure lassen sich die wäßrigen Lösungen der Ammonium- und Alkaliborate und -polyborate so abpuffern, daß wäßrige Lösungen mit hohem Borgehalt (bis 3,5 %) erhalten werden, deren pH-Wert im Bereich von 7,0 bis 7,5 liegt. Diese Lösungen werden als pH-neutral angesehen.

Zur Erzielung des erfindungsgemäßen Effektes können Borsäure, Ammonium- oder Alkaliborate und -polyborate innerhalb ihrer Löslichkeitsgrenzen in einem weiten Bereich miteinander in wäßriger Lösung kombiniert werden.

Die beste pH-Neutralität wird erhalten wenn die Lösungen

0,85 bis 1,15 %
Bor in Form von Ammonium- oder Alkaliborat
0,95 bis 1,25 %
Bor in Form von Ammonium- oder Alkalipolyborat und
1,00 bis 1,10 %
Bor in Form von Borsäure
enthalten.

Die Lösungen können darüberhinaus noch zusätzlich 0,005 bis 0,1 % eines an sich bekannten Netzmittels z. B. Fettalkoholpolyglycolether enthalten, ohne daß ihr rein anorganischer Charakter gestört wird.

Derartige Netzmittel verändern nicht die Löslichkeiten der anorganischen Komponenten, erhöhen aber das Netzverhalten der entstehenden Lösung und verbessern somit ihre Eindrings- und Imprägnierfähigkeit.

Als Borsäure kann sowohl die Ortho- als auch jede Form der Metaborsäure eingesetzt werden. Von technischem Interesse ist nur die Orthoborsäure in technischer Qualität. Einsetzbare Borate sind alle Salze der allgemeinen Formel $A_2B_4O_7$, wobei A entweder Ammonium, Lithium, Natrium oder Kalium bedeutet, in ihren verscheidenen Hydratstufen. Bevorzugte Borate sind Natriumborat-pentahydrat und Natriumborat-Decahydrat. Sie können als Borate einzeln oder im Gemisch eingesetzt werden. Ammonium- und Alkalipolyborate sind solche Borate, die pro Einheit mehr als 4 Boratome besitzen. Beispiele sind Ammonium-, Natrium- oder Kaliumpentaborat, Dinatriumoktaborat jeweils in ihren Hydratstufen, da sich die Hydrate besser lösen als die entsprechenden wasserfreien Salze. Auch die Polyborate können einzeln oder im Gemisch miteinander eingesetzt werden.

Die erfindungsgemäßen Lösungen werden hergestellt durch gemeinsames Auflösen der Einzelkomponenten in Wasser. Dies kann bei Raumtemperatur erfolgen. Es kann jedoch zweckmäßig sein, den Lösevorgang durch Erhitzen auf 40 bis 80 °C zu beschleunigen und anschließend die fertige Lösung abkühlen zu lassen.

**Beispiel**

In 82,85 g Wasser werden bei 20 ˚C unter Rühren gelöst:

| | | |
|---|---|---|
| 6,15 g | Dinatriumtetraborat-Pentahydrat (entsprechend 0,912 % B), | |
| 4,90 g | Dinatriumoktaborat-Tetrahydrat (entsprechend 1,027 % B) und | |
| 6,10 g | Borsäure (entsprechend 1,066 % B) | |

Das Gemisch löst sich nahezu rückstandsfrei (Rückstand 0,05 %) auf.

Die erhaltene klare Lösung hat eine Dichte von 1,092 und einen pH-Wert von 7,2. Sie läßt sich auf 0 ˚C abkühlen, ohne das es zu Auskristallisationen kommt.

Mit der Lösung werden im Streichverfahren Holzprobekörper imprägniert. Das Holz wird dabei nicht verfärbt. An der Oberfläche des Holzes bilden sich keine Krusten. Aus der in einem Arbeitsgang aufgebrachten Lösung läßt sich eine Bormenge von 3,12 g Bor/m$^2$ ermitteln. Die Eindringtiefe nach DIN 52 162 beträgt 5 bis 6 mm.

Damit ist nach den derzeit gültigen Vorschriften (DIN 68 800) eine ausreichende pilzwidrige und vorbeugende insektizide Wirkung gegeben.

**Patentansprüche**

1. Wäßrige Lösungen mit hohem Borgehalt, **dadurch gekennzeichnet**, daß sie Borsäure, Ammonium- oder Alkaliborate und Ammonium- oder Alkalipolyborate enthalten.

2. Lösungen nach Anspruch 1, **dadurch gekennzeichnet**, daß ihr Borgehalt im Bereich von 2,8 bis 3,5 % liegt.

3. Lösungen nach den Ansprüchen 1 und 2, **dadurch gekennzeichnet**, daß sie

   0,85 bis 1,15 %
   Bor in Form von Ammonium- oder Alkaliborat,
   0,95 bis 1,25 %
   Bor in Form von Ammonium- oder Alkalipolyborat und
   1,00 bis 1,10 %
   Bor in Form von Borsäure
   enthalten.

4. Lösungen nach Anspruch 3, **dadurch gekennzeichnet**, daß sie

   0,912 %   Bor in Form von Natrium-Borat-Hydrat,
   1,027 %   Bor in Form von Natriumoktaborat-Tetrahydrat
   1,066 %   Bor in Form von Borsäure enthält.

5. Lösungen nach den Ansprüchen 1 bis 4, **dadurch gekennzeichnet**, daß sie zusätzlich 0,005 bis 0,1 % eines Netzmittels enthalten.

**Europäisches**
**Patentamt**

**EUROPÄISCHER**
**RECHERCHENBERICHT**

Nummer der Anmeldung

**EP 91 10 7296**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-2 998 310   (P. ï BRIAN ET AL.)<br>* Spalte 2, Zeile 63 - Spalte 3, Zeile 9 * * * Spalte 6; Tabellen III,IV * * *Ansprüche* *<br>– – – | 1-5 | B 27 K 3/32<br>B 27 K 3/20 |
| Y | US-A-4 039 645   (R. P. COYLE)<br>* Spalte 1, Zeile 49 - Zeile 65 * * * Spalte 2, Zeile 56 - Zeile 64 * * *Ansprüche* *<br>– – – | 1-5 | |
| Y | GB-A-2 114 003   (BIO-KIL LABORATORIES)<br>* Spalte 1, Zeile 48 - Spalte 2, Zeile 6 * * *Ansprüche* *<br>– – – | 1-5 | |
| Y | EP-A-0 184 663   (BIO-KIL CHEMICALS)<br>* Spalte 4, Zeile 30 - Zeile 37 * * *Ansprüche* *<br>– – – | 1-5 | |
| A | US-A-3 531 278   (N.P. NIES)<br>* Spalte 1, Zeile 41 - Zeile 51 * * * Spalte 2, Zeile 46 - Zeile 58 * * *Ansprüche* *<br>– – – | 1-5 | |
| A | US-A-4 461 721   (R. GOETTSCHE)<br>– – – – – | | |

**RECHERCHIERTE SACHGEBIETE (Int. Cl.5)**

B 27 K

Der vorliegende Recherchenbericht wurde für alle Patentansprüche erstellt

| Recherchenort | Abschlußdatum der Recherche | Prüfer |
|---|---|---|
| Den Haag | 28 Oktober 91 | DALKAFOUKI A. |